# EUROPEAN PATENT SPECIFICATION

(11) **EP 1 780 443 B1**
(45) Date of publication and mention of the grant of the patent: **22.07.2009**
(21) Application number: 05023301.4
(22) Date of filing: 25.10.2005
(51) Int. Cl.: F16H 15/50

(54) **Continuously variable transmission**
Stufenloses Getriebe
Transmission à variation continue

(43) Date of publication of application: 02.05.2007
(73) Proprietor: Yamaha Hatsudoki Kabushiki Kaisha, Iwata-shi, Shizuoka-ken (JP)
(72) Inventor: Hosoi, Yukiharu, Iwata-shi Shizuoka-ken (JP)
(74) Representative: Grünecker, Kinkeldey, Stockmair & Schwanhäusser Anwaltssozietät

(56) References cited:
- WO-A-01/02751
- FR-A- 2 311 233
- GB-A- 821 860
- GB-A- 2 339 863
- GB-A- 2 394 519
- JP-A- 2006 037 989
- US-A- 3 229 538
- US-A- 3 237 468
- US-A- 3 248 960

## Description

The present invention relates to a continuously variable transmission, in particular for an engine for a small vehicle such as a motorcycle or small all-terrain four-wheel vehicle and, further particularly, it also relates to an engine for a small vehicle.

In a continuously variable transmission conventionally used in a scooter-type motorcycle, a rubber V-belt is entrained around a driving pulley on the crankshaft side and a driven pulley on the rear wheel side. The power of the engine is transmitted to the rear wheel by the V-belt. Each of the driving pulley and driven pulley has of a fixed sheave located on one side in the axial direction and a movable sheave on the other side.

The movable sheave of the driving pulley moves in the axial direction when a centrifugal roller is moved in the radial direction, and the movable sheave of the driven pulley is urged toward the fixed sheave by a compression coil spring. In a continuously variable transmission of this type, when the movable sheaves move in the axial direction, the diameter at which the V-belt engages with the pulleys varies and the transmission ratio is continuously varied.

One continuously variable transmission which does not use a V-belt is disclosed in JP-A-2002-513889. The continuously variable transmission disclosed in JP-A-2002-513889 has an inner ring mounted on an input shaft, an outer ring located radially outside the inner ring, and a plurality of transmitting balls rollably held between the inner and outer rings.

Each of the inner and outer rings has a first half and a second half that are aligned in the axial direction. Each of the halves of the inner and outer rings has a concave surface extending in the circumferential direction on which the balls are rolled. The concave surfaces of the halves of the inner ring are so shaped that they form an annular groove with a U-shaped cross-section which opens radially outward when one of the halves comes close to the other half. The concave surfaces of the halves of the outer ring are so shaped that they form an annular groove with a U-shaped cross-section which opens radially inward when one of the halves comes close to the other half.

The first half of the inner ring is secured to an input shaft. The second half of the inner ring is connected to the input shaft or the first half via a guide mechanism which converts rotational motion to reciprocating motion such as a ball screw and urged toward the first half.

The halves of the outer ring are supported by a transmission casing so that they cannot be rotated together with the inner ring. That is, when the inner ring rotates together with the input shaft, the balls roll on the concave surfaces of the outer ring and rotate around the axis of the input shaft in the same direction as the rotating direction of the inner ring while rotating on its axis.

The first and second halves of the outer ring are connected, as in the case with the halves of the inner rings, via a guide mechanism which converts rotational motion to reciprocating motion such as a ball screw in such a manner that the distance between them can be varied. A speed changing lever is attached to the first half of the outer ring. The speed changing lever is protruded from the first half of the outer ring. When the first half is rotated with respect to the second half by the speed changing lever, the distance between the halves of the outer ring is increased or decreased. For example, when the distance between the halves of the outer ring is decreased by operating the speed changing lever, the transmitting balls are pressed toward the inner ring by the halves of the outer ring and the second half of the inner ring is moved away from the first half against the elastic force of the spring. As a result, the radius of rotation of the balls around the axis of the input shaft is decreased.

A plurality of transmitting balls are interposed between the inner and outer rings and are in contact with a plurality of driven rollers interposed between the balls. The driven rollers are rotatably supported on an axial end of a roller supporting member rotatable about the axis of the input shaft. That is, when the balls rotate around the axis of the input shaft, the driven rollers are pressed by the balls and the roller supporting member is rotated about the axis of the input shaft. An output shaft is connected to an end of the roller supporting member.

When the driven rollers rotate around the axis of the input shaft together with the transmitting balls, the output shaft is rotated together therewith. Even if the rotational speed of the input shaft is constant, the rotational speed of the output shaft is decreased when the radius of rotation of the transmitting balls around the axis of the input shaft is relatively decreased, and increased when the radius of rotation of the transmitting balls around the axis of the input shaft is relatively increased. Thus, in this conventional continuously variable transmission, the rotational speed of the output shaft can be increased or decreased by operating the speed changing lever even if the rotational speed of the input shaft is constant.

The present inventors think of equipping a small vehicle having a high-power engine which has an output power a few times greater than engines for scooters with a continuously variable transmission. However, a conventional V-belt type continuously variable transmission cannot be used in a small vehicle with an engine having an output power greater than engines for scooters since a rubber V-belt has a limit on magnitude of power to be transmitted (transmission capacity).

The transmission capacity of a continuously variable transmission of this type can be increased by using what is called a steel belt instead of a rubber V-belt. When this constitution is employed, however, the strength of the rotating parts must be increased since the weight of the belt is large. Thus, although the transmission capacity is increased, there arises another disadvantage that as the size is increased, the weight is increased.

As continuously variable transmissions which do not use a power transmitting belt, there are torque converter type transmissions used in passenger cars, toroidal type transmissions in which an axial angle variable roller is interposed between power transmitting faces opposed to each other, and ball type continuously variable transmissions as disclosed in JP-A-2002-513889.

Since the torque converter type and toroidal type continuously variable transmissions are larger in size and weight than belt-type continuously variable transmissions, they cannot be mounted on small vehicles which must be able to be handled easily such as motorcycles.

The ball type continuously variable transmission as disclosed in JP-A-2002-513889 can be smaller in size and weight than the above two types of continuously variable transmissions. However, when it is mounted on a motorcycle, there arises a defect that no engine braking can be achieved and the engine cannot be started by push-starting.

This is because when a driving force in the opposite direction is applied to the output shaft of the ball type continuously variable transmission from the rear wheel side, the driven rollers press the balls, causing the balls to slip between the inner and outer rings.

Also, when the ball type continuously variable transmission disclosed in JP-A-2002-513889 is mounted on a small vehicle such as a motorcycle, the balls and the inner and outer rings, on which the balls are rolled, must be fully lubricated to prevent temperature rise or wear of the balls with increase of transmission torque.

WO 01/02751 A according to the preamble of claim 1 discloses a continuously variable transmission, comprising a radially inner race having oppositely directed axially extending shafts connected to a drive shaft and a radially outer race located radially outside of the inner race. A plurality of planet balls are interposed between the inner race and the outer race. A follower cage supports follower rollers, wherein an output shaft is connected to the follower cage.

FR-A-2311233 discloses a continuously variable friction wheel transmission comprising an input shaft, a drive plate carrying a plurality of conical friction rollers, a conical sleeve driven by the friction rollers and an output shaft connected to the sleeve. A one-way clutch is interposed between the input shaft and the output shaft.

US-A-3229538 discloses a frictional drive transmission comprising an input shaft, an output shaft and a ball and race type friction drive mechanism connected therebetween. Balls of drive mechanism are lubricated by a passage extending axially in the input shaft being in communication to radially extending passages.

It is the object of the present invention to provide a ball type continuously variable transmission which allows engine braking and push-starting of the vehicle.

This object is solved by the features of claim 1.

Preferably, a rotation of a crankshaft is transmitted to the input shaft.

Further, preferably the rolling inner ring includes two halves aligned in an axial direction of the input shaft and rotatable together with the input shaft, and wherein the rolling outer ring includes two halves located radially outside the inner ring and aligned in the axial direction, and restrained from rotating around the axis of the input shaft.

Still further, preferably the transmitting balls are rollably held between the inner ring and the outer ring and the driven rollers interposed between the transmitting balls are in contact with the transmitting balls.

Yet further, preferably the roller supporting member supports the driven rollers for rotation around the axis of the input shaft.

According to a further preferred embodiment, the roller supporting member and a wheel driving transmission member are connected to the output shaft, said output shaft being provided for rotation around the axis of the input shaft.

According to yet another preferred embodiment, the continuously variable transmission further comprises a speed changing means for varying the rotational speed of the transmitting balls around the inner ring by varying the distance between the halves of the inner and outer rings.

According to still another preferred embodiment, the output shaft has a cylindrical portion for receiving the input shaft, and wherein the one-way clutch, which can transmit power only from the output shaft to the input shaft, is interposed in the cylindrical portion.

If the input shaft has a lubricating oil passage therein extending from an end of the input shaft to a position on the outer periphery thereof corresponding to the transmitting balls and connected to a lubricating oil supply device, the lubrication of a continuously variable transmission of this type is further improved.

Further, beneficially, one end part of the input shaft of the continuously variable transmission is disposed parallel to an engine drive shaft and in meshing engagement with the engine drive shaft, and wherein a transmission ball rolling part is disposed on the other end of the input shaft.

Therein, preferably the cylindrical portion of the output shaft and the one-way clutch of the continuously variable transmission are disposed around an intermediate portion of the input shaft, and wherein the wheel driving transmission member is disposed on the cylindrical portion.

Still further, preferably one end of the input shaft of the continuously variable transmission is connected coaxially to an engine drive shaft, and wherein a transmission ball rolling part is disposed on an intermediate portion of the input shaft.

Yet further, preferably the cylindrical portion of the output shaft and the one-way clutch of the continuously variable transmission are located around the other end of the input shaft, and wherein the wheel driving transmission member is disposed on the cylindrical portion.

In the following, the present invention is explained in greater detail with respect to several embodiments thereof in conjunction with the accompanying drawings, wherein:
- FIG. 1: is vertical cross-sectional view of a continuously variable transmission according to an embodiment,
- FIG. 2: is an enlarged cross-sectional view, illustrating a ball at the time when the speed reduction ratio is minimum,
- FIG. 3: is a constitution diagram of the continuously variable transmission according to the present embodiment,
- FIG. 4: is a front view of a housing,
- Fig. 5: is a cross-sectional view taken along the line V-V in Fig. 4,
- FIG. 6: is a view, illustrating a first outer ring,
- FIG. 7: is a view, illustrating an aligning disk,
- FIG. 8: is a view, illustrating an aligning pin,
- FIG. 9: is an exploded perspective view, illustrating a general constructure of the continuously variable transmission according to the present embodiment,
- FIG.10: is a view, illustrating an engine for a motorcycle equipped with the continuously variable transmission according to the present embodiment,
- FIG. 11: is a side view, illustrating the constitution of the engine equipped with the continuously variable transmission according to the present embodiment,
- FIG.12: is vertical cross-sectional view, illustrating another embodiment of the continuously variable transmission of an engine for a small vehicle,
- FIG. 13: is an enlarged cross-sectional view, illustrating a ball at the time when the speed reduction ratio is minimum,
- FIG.14: is a view, illustrating an engine for a motorcycle equipped with the continuously variable transmission,
- FIG. 15: is a side view, illustrating the constitution of the engine shown in FIG. 14,
- FIG. 16: is a side view, illustrating another embodiment of the engine for a small vehicle, and
- Fig. 17: is a cross-sectional view taken along the line XVII-XVII in Fig. 16.

### (First Embodiment)

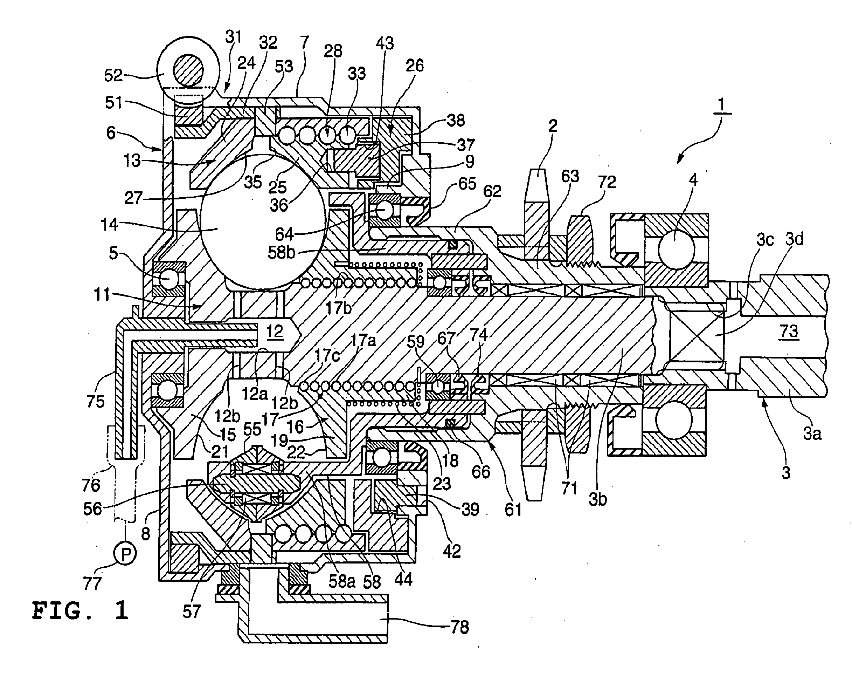

Description is hereinafter made of one embodiment of a continuously variable transmission of an engine for a small vehicle with reference to FIGs. 1 to 9.

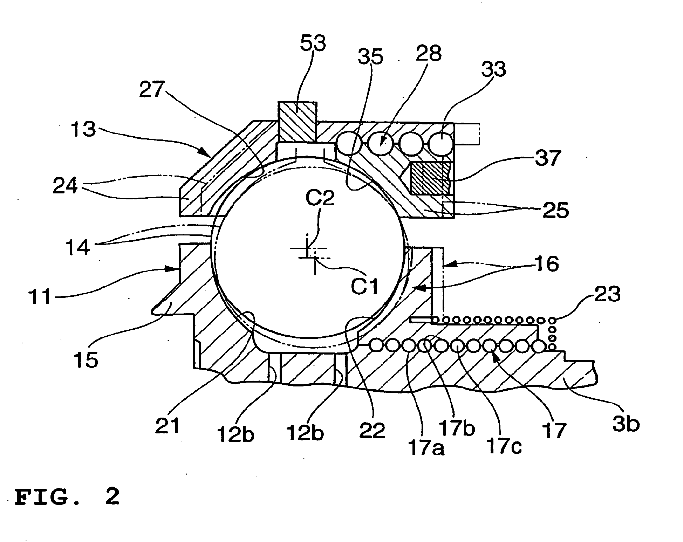

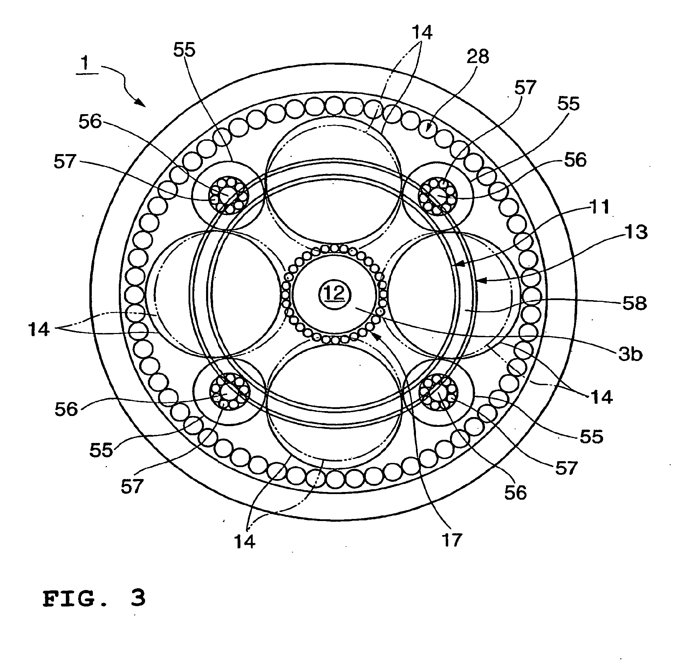

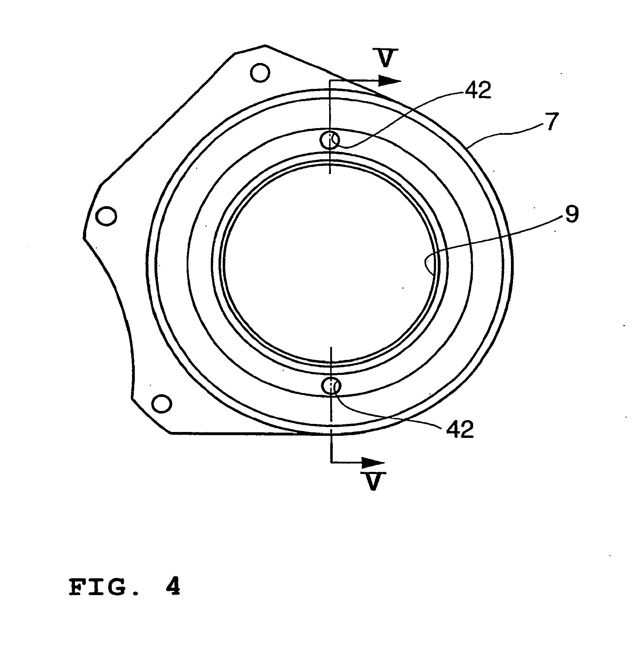

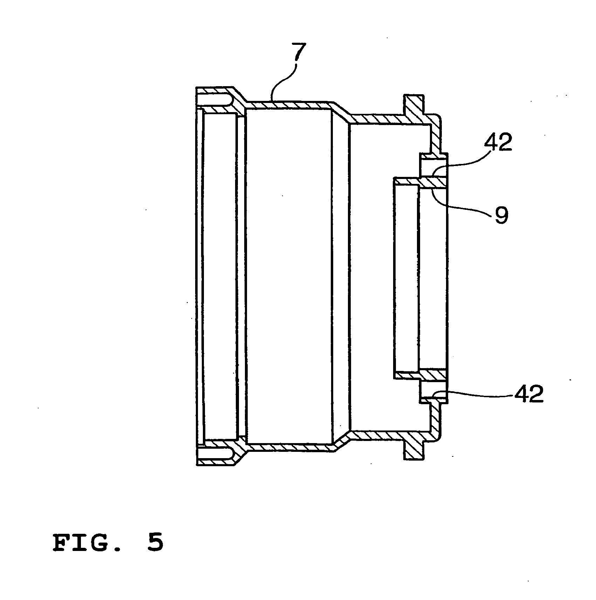

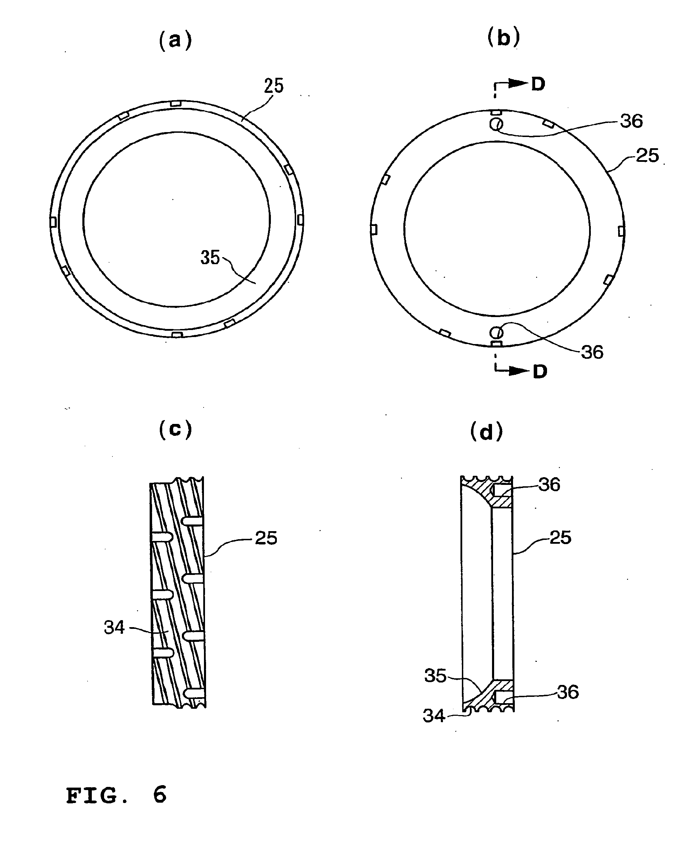

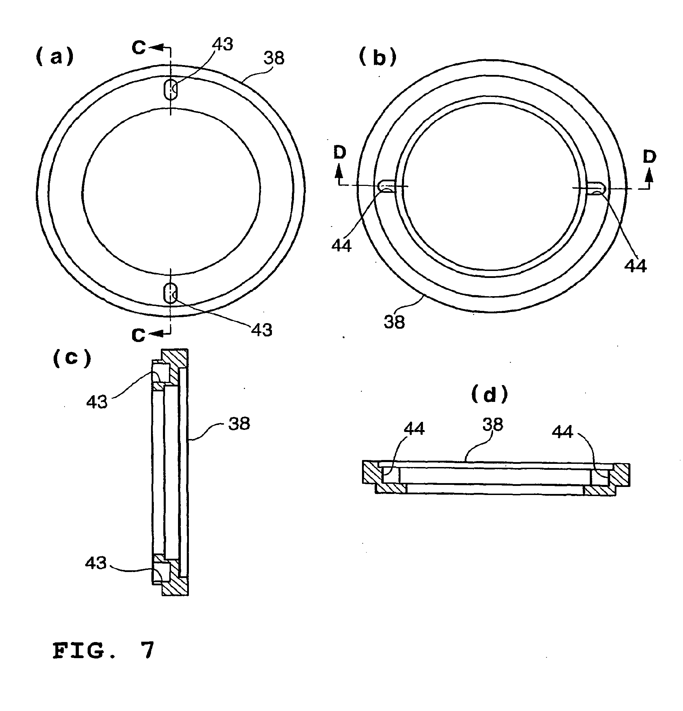

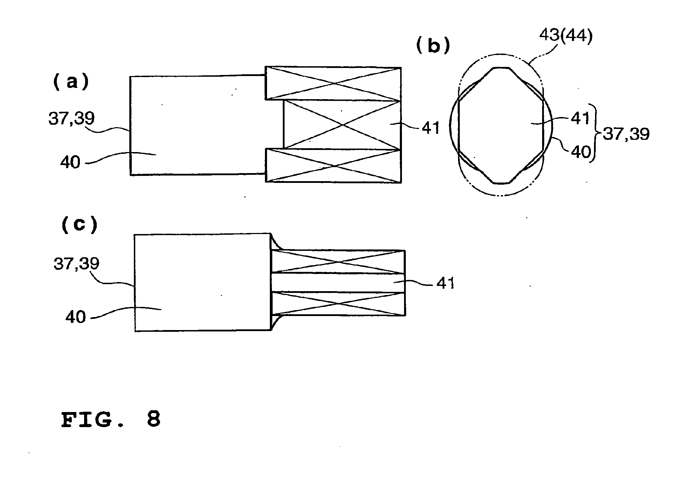

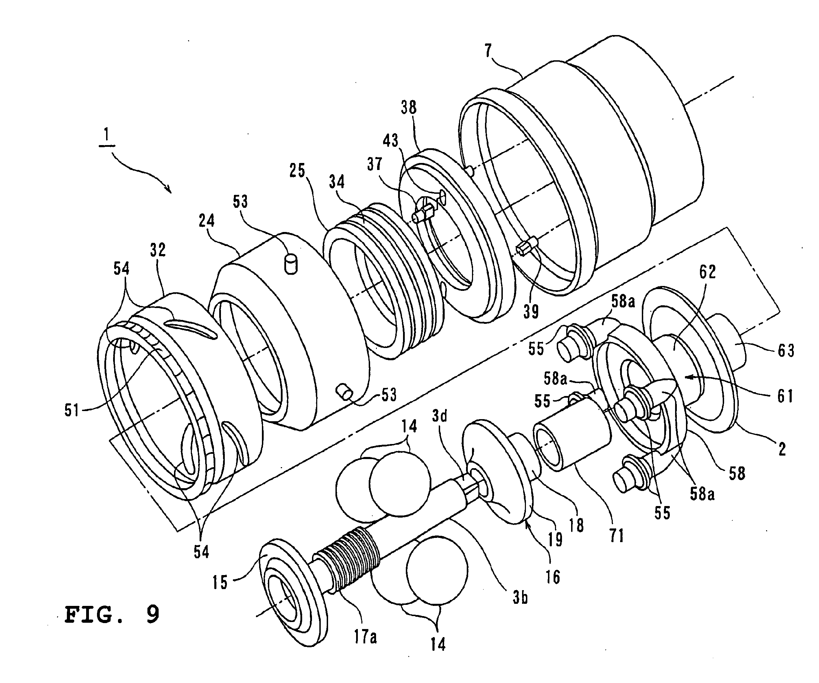

FIG. 1 is vertical cross-sectional view of a continuously variable transmission according to the present embodiment, FIG. 2 is an enlarged cross-sectional view, illustrating a ball at the time when the speed reduction ratio is minimum, FIG. 3 is a constitution diagram of the continuously variable transmission according to the present embodiment, FIG. 4 is a front view of a housing, FIG. 5 is a cross-sectional view taken along the line V-V in FIG. 4, and FIG. 6 is a view, illustrating a first outer ring, in which (a) is a front view seen from the side of the balls, (b) is a rear view, (c) is a side view, and (d) is a cross-sectional view taken along the line D-D in (b). FIG. 7 is a view, illustrating an aligning disk, in which (a) is a front view seen from the side of balls, (b) is a rear view, (c) is a cross-sectional view taken along the line C-C in (a), and (d) is a cross-sectional view taken along the line D-D in (b). FIG. 8 is a view, illustrating an aligning pin, in which (a) is a side view, (b) is a rear view, and (c) is a bottom view. FIG. 9 is an exploded perspective view, illustrating a general construction of the continuously variable transmission according to the present embodiment.

In the drawings, reference numeral 1 denotes a continuously variable transmission according to this embodiment. The continuously variable transmission 1 is interposed between a clutch of an engine for a motorcycle (not shown) and a chain sprocket 2 for driving a rear wheel. The clutch has, as is conventionally well known, an input part in meshing engagement with a crankshaft and an output part which is connected to and disconnected from the input part and has a clutch shaft. In this embodiment, the clutch shaft constitutes an engine drive shaft.

The clutch shaft is disposed parallel to the crankshaft and in meshing engagement with an input shaft 3 of the continuously variable transmission 1 via a speed reduction gear (not shown). The input shaft 3 may be constituted of the clutch shaft itself. In this case, the continuously variable transmission 1 is directly connected to the clutch shaft. The chain sprocket 2 is, as is conventionally well known, connected to a rear wheel-side sprocket (not shown) via a chain. The chain sprocket 2 constitutes a wheel driving transmission member in the present embodiment.

In this embodiment, the input shaft 3 of the continuously variable transmission 1 has a first input shaft 3a in meshing engagement with the clutch shaft, and a second input shaft 3b disposed coaxially with the first input shaft 3a as shown in FIG. 1. The connection of the first and second input shafts 3a and 3b is established by fitting a square column part 3d on a first end of the second input shaft 3b into a hole 3c with a square cross-section formed in an end of the first input shaft 3a so that the first and second input shafts 3a and 3b are rotatable together. The joint of the first and second input shafts 3a and 3b is rotatably supported on a transmission case (not shown) of the engine via a bearing 4.

The second end of the second input shaft 3b (the end opposite the first input shaft 3a) is rotatably supported on a transmission housing 6 via a bearing 5. The transmission housing 6, which houses the components of a transmission, which are described later, is constituted of a cylindrical housing body 7 (see FIGs. 1, 4 and 5) and a lid 8 for closing an opening at a second end of the housing body 7, and supported by a crankcase cover (not shown) and so on. As shown in FIGs. 1 and 5, an inner cylinder 9 is formed integrally with a first end of the housing body 7. The bearing 5 for supporting the second end of the second input shaft 3b is supported by the lid 8.

An inner ring 11 is formed on the second end of the second input shaft 3b, and a lubricating oil passage 12 is formed in the second end of the second input shaft 3b. The inner ring 11 rolls transmitting balls 14 in conjunction with an outer ring 13, which is described later, and has a first inner ring half 15 and a second inner ring half 16 aligned in the axial direction of the second input shaft 3b.

The first inner ring half 15 is a disk formed integrally with an end of the second input shaft 3b, and the second inner ring half 16 is constituted of a cylindrical boss 18 supported on the second input shaft 3b via a ball screw mechanism 17 and a disk 19 formed integrally with an end of the boss 18 on the side of the first inner ring half 15.

The ball screw mechanism 17 has a conventionally well-known structure and has a multiplicity of balls 17c rollably received in spiral grooves 17a and 17b formed in the inner peripheral surface of the boss 18 of the second inner ring half 16 and the outer peripheral surface of the second input shaft 3b, respectively.

The opposed faces of the first and second inner ring halves 15 and 16 have concave surfaces 21 and 22, respectively, extending in the circumferential direction of the inner ring halves. The concave surfaces 21 and 22 form side walls of a ball rolling groove and are so shaped that the width of the ball rolling groove gradually increases toward outside in the radial direction of the first and second inner ring halves 15 and 16.

One end of a torsion spring 23, the other end of which is engaged with the second input shaft 3b, is engaged with the second inner ring half 16. The second inner ring half 16 is urged in a direction to rotate about the axis of the second input shaft 3b by the torsion spring 23. The direction in which the second inner ring half 16 is urged by the torsion spring 23 is the direction in which the second inner ring half 16 is moved toward the first inner ring half 15 by the ball screw mechanism 17 interposed between the second inner ring half 16 and the second input shaft 3b. Since the second inner ring half 16 is urged by the torsion spring 23, the concave surfaces 21 and 22 of the inner ring halves 15 and 16 sandwich the balls 14 from both sides in the axial direction and the concave surfaces 21 and 22 substantially function as a cam to press the balls 14 radially outward. The radially outward movement of the balls 14 pressed radially outward by the inner ring 11 is restrained by an outer ring 13 located radially outside the inner ring 11.

The outer ring 13 is constituted of a first outer ring half 24 and a second outer ring half 25 aligned in the axial direction of the second input shaft 3b, and supported by the housing body 7 via an aligning mechanism 26 connected to an end of the second outer ring half 25 as shown in FIG. 1. The first outer ring half 24 is of a cylindrical shape and has a ball rolling concave surface 27 at an axial end of its inner periphery. The second outer ring half 25 is connected to the other end of the inner periphery of the first outer ring half 24 via a ball screw mechanism 28. The first outer ring half 24 is supported by the second outer ring half 25 via the ball screw mechanism 28. A cylindrical slider 32 constituting part of speed changing means 31, which is described later, is fitted over the outer periphery of the first outer ring half 24.

As shown in FIGs. 6 and 9, the second outer ring half 25, which is of an annular shape, has a spiral groove 34 in its outer periphery for receiving balls 33 of the ball screw mechanism 28 (see FIG. 1) and a ball rolling concave surface 35 opposed to the concave surface 27 of the first outer ring half 24 at an end in the axial direction. The concave surface 35 of the second outer ring half 25 and the concave surface 27 of the first outer ring half 24 form side walls of a ball rolling groove and are so shaped that the width of the ball rolling groove gradually increases toward inside in the radial direction of the first and second outer ring halves 24 and 25. As shown in FIGs. 1 and 6(d), the second outer ring half 25 has pin bores 36 for connecting an aligning mechanism 26, which will described below, at the end opposite the balls 14.

The aligning mechanism 26 connects the first and second outer ring halves 24 and 25 to the housing body 7 for movement in two radial directions perpendicular to each other and includes: first aligning pins 37 fitted in the pin bore 36 of the second outer ring half 25; an aligning disk 38 connected to the second outer ring half 25 via the aligning pins 37; and second aligning pins 39 for connecting the aligning disk 38 to the housing body 7.

Each of the first and second aligning pins 37 and 39 has a cylindrical column portion 40 and a prismatic column portion 41 as shown in FIG. 8. The cylindrical column portion 40 has a cylindrical column shape movably receivable in the pin bore 36 of the second outer ring half 25 and pin bore 42 of the housing body 7 (see FIGs. 1, 4 and 5). The prismatic column portion 41 has a honeycomb pattern elongated vertically as viewed in the axial direction as shown in FIG. 8(b). The prismatic column portion 41 is receivable in slots 43 and slot-like notches 44 of the aligning disk 38 shown in FIG. 7.

The slots 43 are formed in the end of the aligning disk 38 opposed to the second outer ring half 25 as shown in FIGs. 7(a) and (c). The slots 43 open toward the second outer ring half 25 at diametrically opposite positions on the aligning disk 38 (top and bottom in FIG. 7) and are elongated in a radial direction of the aligning disk 38.

The slot-like notches 44 in the aligning disk 38 are formed in the other end of the aligning disk 38 at two positions along a direction perpendicular to the direction in which the slots 43 are arranged (horizontal direction in FIG. 7) as viewed in the axial direction and elongated in a radial direction of the aligning disk 38 as shown in FIGs. 7(b) and (c).

The slots 43 and the slot-like notches 44 have such an opening size that the prismatic column portions 41 of the first and second aligning pins 37 and 39 are movable in the longitudinal direction (the elongated direction as viewed in the axial direction) thereof but not in the transverse direction thereof as shown in FIG. 8(b) when received therein.

That is, in the aligning mechanism 26 according to this embodiment, the aligning disk 38 is supported by the housing body 7 for movement in the longitudinal direction of the slot-like notches 44 (horizontal direction in FIG. 7(b)), and the second outer ring half 25 is supported by the aligning disk 38 for movement in the longitudinal direction of the slots 43 (vertical direction in FIG. 7(a)). Thus, since the second outer ring half 25 is supported by the housing body 7 via the aligning mechanism 26, the second outer ring half 25 is supported in such a manner that it is movable in two radial directions perpendicular to each other with respect to the housing body 7 but restrained from rotating about the axis of the second input shaft 3b. Since the first outer ring half 24 is integrally attached to the second outer ring half 25 via the ball screw mechanism 28, the outer ring 13 constituted of the halves 24 and 25 is movable in the above two directions.

Since the outer ring 13 is movable in the radial directions, when the balls 14 is rotated around the axis of the second input shaft 3b between the inner ring 11 and the outer ring 13, the axis of the outer ring 13 and the center of rotation of the balls 14 (the axis of the second input shaft 3b) are always coincident with each other. Also, since the second outer ring half 25 is moved in the axial direction with respect to the first aligning pins 37, the outer ring 13 can be positioned in the axial direction such that the balls 14 can be properly in contact with the outer ring halves 24 and 25. The distance between the concave surfaces 27 and 35 of the outer ring halves 24 and 25 is increased and decreased by the speed changing means 31, which is described below.

The speed changing means 31 includes the slider 32 fitted over the first outer ring half 24, a worm wheel 51 provided on an axial outer end of the slider 32, a speed changing motor (not shown) having a worm 52 in meshing engagement with the worm wheel 51, and so on. The speed changing motor is supported by the transmission housing 6.

The slider 32 is movably fitted over the outer periphery of the first outer ring half 24, and has cam grooves 54 (see FIG. 9) for receiving pins as cam followers 53 protruding from the first outer ring half 24. The cam grooves 54 are formed spirally so that when the slider 32 is rotated circumferentially by the worm wheel 51 and the worm 52, the cam followers 53 and the first outer ring half 24 can be rotated in the circumferential direction and moved in the axial direction.

More specifically, since the second outer ring half 25 of the first and second outer ring halves 24 and 25 is restrained from rotating by the aligning mechanism 26 and the housing body 7, when torque is transmitted from the slider 32 to the first outer ring half 24 via the cam followers 53, the first outer ring half 24 is rotated with respect to the second outer ring half 25. When the first outer ring half 24 is rotated as described above, the rotation thereof is converted to reciprocating motion in the axial directions by the ball screw mechanism 28 and transmitted to the second outer ring half 25 to move the second outer ring half 25 in an axial direction. At this time, the first outer ring half 24 is moved in one axial direction and the second outer ring half 25 is moved in the other axial direction so that the balls 14 can be pressed against the concave surface 27 of the first outer ring half 24 and the concave surface 35 of the second outer ring half 25 evenly. That is, the cam grooves 54 have a shape along the moving direction of the first outer ring half 24 movable as described above.

As described above, since the distance between the concave surface 27 of the first outer ring half 24 and the concave surface 35 of the second outer ring half 25 is varied when the first outer ring half 24 and the second outer ring half 25 are moved in the opposite directions along the axial direction, the turning radius of the balls 14 around the axis of the second input shaft 3b between the inner ring 11 and the outer ring 13 is varied. For example, when the distance between two concave surfaces 27 and 35 of the outer wheel 13 is decreased, the distance between two concave surfaces 21 and 22 of the inner ring 11 is increased and the turning radius of the balls 14 is relatively decreased. In the reverse case, the turning radius of the balls 14 is increased. The position of the center of one of the balls 14 at the time when the distance between the concave surfaces 27 and 35 of the outer ring 13 is minimum is indicated as C1 in FIG. 2, and the position of the center of the ball 14 at the time when the distance between the concave surfaces 27 and 35 of the outer ring 13 is maximum is indicated as C2 in FIG. 2.

That is, when the distance between the concave surfaces 27 and 35 of the outer ring 13 is increased from minimum to maximum, the center of rotation of each of the balls 14 at the time when the balls 14 are rotated around the axis of the second input shaft 3b are changed continuously from the center position C1 to the center positions C2. FIG. 1 shows the state in which the distance between the two concave surfaces 27 and 35 of the outer ring 13 is minimum, and FIGs. 2 and 3 show the state in which the distance between the two concave surfaces 27 and 35 of the outer ring 13 is maximum. In FIGs. 2 and 3, the state in which the distance between the two concave surfaces 27 and 35 of the outer ring 13 is minimum is shown by double-dot-dash lines (in FIGs. 3, the positions of the balls 14 are shown).

As shown in FIG. 3, four balls 14 are disposed circumferentially around the second input shaft 3b at equal intervals. The balls 14 are in contact with driven rollers 55 interposed between the balls 14.

The driven rollers 55, which have a disk shape with an axis parallel to the axis of the second input shaft 3b, are rotatably supported by bearings 57 via support shafts 56 extending through the centers of the driven rollers 55 and supported by a roller supporting member 58, which is described later, as shown in FIGs. 1 and 9. The driven rollers 55 are located at positions corresponding to the centers of the balls 14 in the axial direction of the second input shaft 3b as shown in FIG. 1. In this embodiment, each of the driven rollers 55 is in contact with adjacent two balls 14 as shown in FIG. 3.

The roller supporting member 58 has four arms 58a for supporting the support shafts 56 for the driven rollers 55, and a cylindrical body 58b for supporting one ends of the arms 58b in a cantilever fashion as shown in FIGs. 1 and 9. The end of the cylindrical body 58b opposite the arms 58a are rotatably supported on the second input shaft 3b via a bearing 59 and connected to a cylindrical output shaft 61, which is described below.

The cylindrical output shaft 61 has a large-diameter portion 62 fitting over the outer periphery of the cylindrical body 58b and a small-diameter portion 63 axially protruded from an end of the large-diameter portion 62 opposite the balls 14, and is attached to the second input shaft 3b extending through it. The small-diameter portion 63 constitutes a cylindrical portion of an output shaft in the present invention. The other end of the large-diameter portion 62 (the end on the side of the balls 14) is rotatably supported by the inner cylinder 9 of the housing body 7 via a bearing 64.

An oil seal 65 is interposed between the inner periphery of the part of the inner cylinder 9 located outside the bearing 64 and the outer periphery of the large-diameter portion 62. An O-ring 66 is interposed between the large-diameter portion 62 of the cylindrical output shaft 61 and the cylindrical body 58b of the roller supporting member 58, and an oil seal 67 is interposed between an end of the cylindrical body 58b and the second input shaft 3b. The seal members (the oil seals 65, 67 and the O-ring 66) seal the joint between the transmission housing 6 and the input and output shafts.

The inner periphery of the small-diameter portion 63 of the cylindrical output shaft 61 is connected to the second input shaft 3b via a one-way clutch 71. The one-way clutch 71 cannot transmit power from the second input shaft 3b to the small-diameter portion 63 and can transmit power only from the small-diameter portion 63 to the second input shaft 3b. A chain sprocket 2 is secured to the outer periphery of the small-diameter portion 63 by a rock nut 72.

One end (the end opposite the balls 14) of a one-way clutch accommodating space formed between the small-diameter portion 63 and the second input shaft 3b is in communication with a lubricating oil passage 73 in the first input shaft 3a through an oil passage defined as a clearance at the joint between the first input shaft 3a and the second input shaft 3b. Some of engine oil is supplied to the lubricating oil passage 73 from an oil pump (not shown). The other end of the one-way clutch accommodating space is sealed by an oil seal 74 interposed between the cylindrical output shaft 61 and the second input shaft 3b.

The oil passage 12 formed in the second end of the second input shaft 3b (the end on which the first inner ring half 15 is formed) is connected to the lubricating oil delivery port of a lubricating oil pump 77 exclusively for the transmission through a connection pipe 75 attached to and extending through the lid 8 of the transmission housing 6, and a lubricating oil hose 76 connected to the pipe 75 as shown in FIG. 1. The lubricating oil pump 77 exclusively for the transmission 77 constitutes a lubricating oil supply device in the present embodiment.

The lubricating oil passage 12 has an axial extension 12a extending axially in the second input shaft 3b from an end to a position corresponding to the ball rolling groove, and a plurality of radial extensions 12b extending radially from the axial extension 12a and opening in the outer peripheral surface of the second input shaft 3b. The downstream openings of the radial extensions 12b are located in the vicinity of the concave surface 21 of the first inner ring half 15 and the concave surface 22 of the second inner ring half 16.

That is, when lubricating oil is supplied from the lubricating oil pump 77 exclusively for the transmission to the lubricating oil passage 12, the lubricating oil on the contact parts of the inner ring 11 and the balls 14 by centrifugal force, and adheres, as the balls 14 are rolled, to the contact parts of the outer ring 13 and the balls 14 and the contact parts of the balls 14 and the driven rollers 55. As described above, some of the lubricating oil for lubricating the balls 14 is splashed radially outward from the balls 14 rotating around the axis of the second input shaft 3b by centrifugal force to lubricates the driven roller supporting bearings 57, the sliding contact parts of the cam followers 53 and the cam grooves 54 of the speed changing means 31, the ball screw mechanism 28 of the outer ring 13, the sliding parts of the aligning pins 37 and so on.

After having lubricated the above lubricated parts, the lubricating oil drips or flows down to the bottom of the transmission housing 6 and returns to a transmission lubricating oil storage section (not shown) through a lubricating oil discharge pipe 78 connected to the bottom of the housing body 7. The lubricating oil storage section is connected to the suction port of the lubricating oil pump 77 exclusively for the transmission. The lubricating oil for the transmission is stored in a lubricating system which is isolated from the engine lubricating system so that it cannot mix in engine oil stored in the crankcase of the engine.

In the continuously variable transmission 1 constituted as described above, when the first and second input shafts 3a and 3b rotate together with the clutch shaft of the engine, the inner ring 11 rotates and the balls 14 rotate around the axis of the second input shaft 3b between the inner ring 11 and the outer ring 13. When the balls 14 rotate, the balls 14 press the driven rollers 55 adjoining thereto and the driven rollers 55, the roller supporting member 58 and the cylindrical output shaft 61 are rotated together around the axis of the second input shaft 3b. By the rotation of the cylindrical output shaft 61, power is transmitted from the chain sprocket 2 via the chain to the rear wheel to rotate.

In this operating state, when the distance between the two concave surfaces 27 and 35 of the outer ring 13 is decreased to minimum by the speed changing means 31 as shown in FIG. 1, the positions in which the balls 14 rotated get closer to the second input shaft 3b and the balls 14 roll on a relatively axially inner part of the inner ring 11. In this state, since the circumferential length of the part of the inner ring 11 on which the balls 14 roll is minimum and the rotational speed of the balls 14 rolling on the inner ring 11 is minimum, the rotational speed of the balls 14 around the second input shaft 3b is minimum. In this state, the speed reduction ratio is maximum.

On the other hand, when the distance between the two concave surfaces 27 and 35 of the outer ring 13 is increased to maximum by the speed changing means 31 as shown in FIG. 2, the positions in which the balls 14 rotate get away from the second input shaft 3b and the balls 14 roll on a relatively axially outer part of the inner ring 11. In this state, since the circumferential length of the part of the inner ring 11 on which the balls 14 roll is maximum and the rotational speed of the balls 14 rolling on the inner ring 11 during a rotation of the second input shaft 3b is maximum, the rotational speed of the balls 14 around the second input shaft 3b is maximum. In this state, the speed reduction ratio is minimum. As described above, the speed reduction ratio of the continuously variable transmission 1 is continuously varied between the maximum and minimum values by changing the distance between the two concave surfaces 27 and 35 with the speed changing means 31.

When the motorcycle equipped with the continuously variable transmission 1 uses engine braking during running, driving force in the opposite direction is applied from the chain sprocket 2 to the cylindrical output shaft 61. The driving force in the opposite direction is directly transmitted from the cylindrical output shaft 61 to the second input shaft 3b via the one-way clutch 71 and transmitted from the second input shaft 3b to the crankshaft via the first input shaft 3a and the clutch.

Thus, since the continuously variable transmission 1 according to this embodiment can transmit all the driving force in the opposite direction from the cylindrical output shaft 61 to the engine, sufficient engine braking is available. In addition, the continuously variable transmission allows the engine to be started by push-starting.

In the continuously variable transmission 1 according to this embodiment, lubricating oil is constantly supplied from the lubricating oil pump 77 exclusively for the transmission to the axial part of the inner ring 11 and the contact parts of the balls 14 and the inner and outer ring 11 and 13 are lubricated by the lubricating oil. Thus, in the continuously variable transmission 1, the contact parts of the balls 14 and the inner and outer ring 11 and 13 can be lubricated effectively and reliably.

### (Second Embodiment)

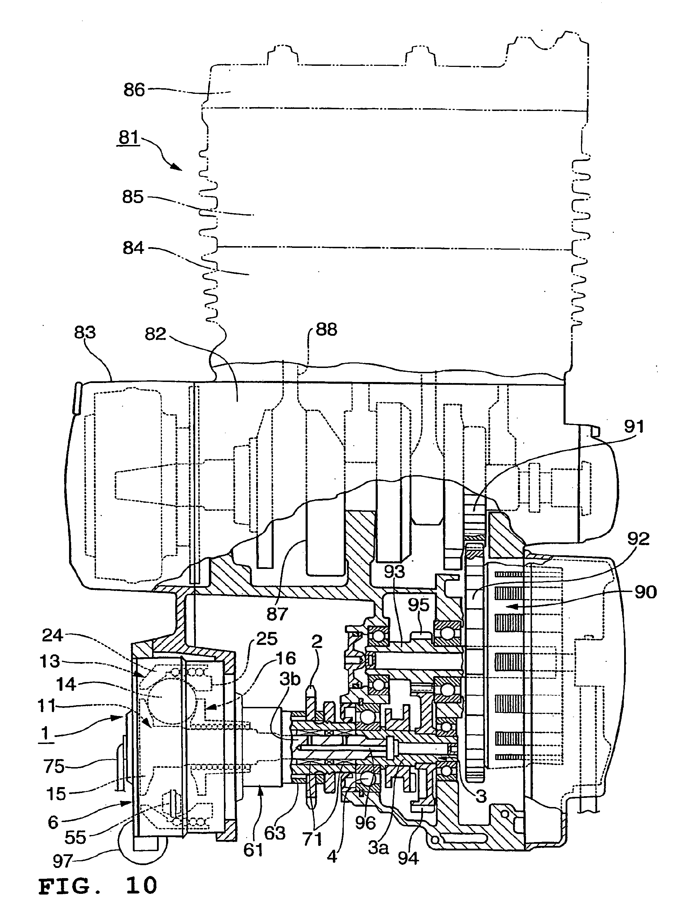

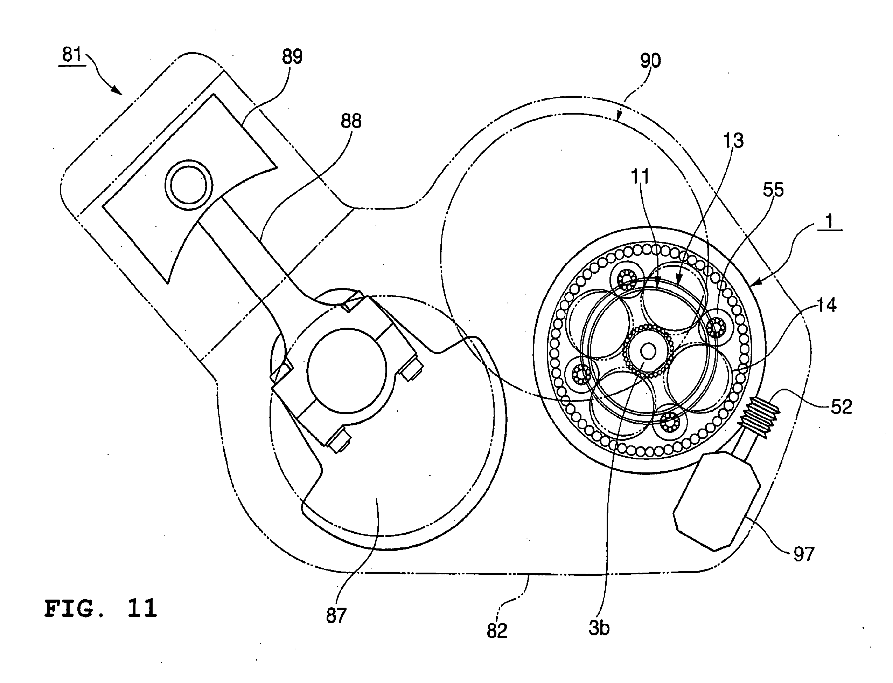

The continuously variable transmission 1 shown in the first embodiment can be incorporated in an engine as shown in FIGs. 10 and 11.

FIG. 10 is a view, illustrating an engine for a motorcycle equipped with the continuously variable transmission according to an embodiment, in which part of the crankcase is shown broken. FIG. 11 is a side view, illustrating the constitution of the engine equipped with the continuously variable transmission according to the present embodiment. Members identical with or equivalent to those described with reference to FIGs. 1 to 9 are denoted in the drawings by the same reference numerals and their detailed description is not repeated.

In FIGs. 10 and 11, designated as 81 is a four-cycle, two-cylinder engine for a motorcycle, as 82 is a crankcase of the engine, as 83 is a crankcase cover, as 84 is a cylinder body, as 85 is a cylinder head, as 86 is a head cover, as 87 is a crankshaft, as 88 is a connecting rod, as 89 is a piston, and as 90 is a hand operated clutch. The cylinder body 84 is so formed that the axes of the cylinders inclined forward and upward as shown in FIG. 11.

The clutch 90, which is a conventionally known multiple disk clutch, has a speed reduction large gear 92 in meshing engagement with a driving gear 91 on the crankshaft 87 and can switches between a connected state in which the rotation of the large gear 92 can be transmitted to a clutch shaft 93 and a disconnected state in which the power transmission route is disconnected. The clutch shaft 93 is disposed parallel to the crankshaft 87. The clutch shaft 93 constitutes an engine drive shaft in the present embodiment.

The continuously variable transmission 1 of this embodiment has a constitution generally the same as that of the continuously variable transmission 1 shown in the first embodiment and incorporated in the engine 81 with its axial direction extending in the vehicle width direction. That is, the end of an input shaft 3 of the continuously variable transmission 1 on the right side in the vehicle body is in meshing engagement with the clutch shaft 93 via speed reduction gears 94 and 95, and an inner ring 11 (ball rolling part) is provided on the end of the input shaft 3 on the left side in the vehicle body. A small-diameter portion 63 of a cylindrical output shaft 61 and a one-way clutch 71 are located around an axially intermediate portion of the input shaft 3. A chain sprocket 2 is attached to an outer periphery of the small-diameter portion 63.

In this embodiment, a lubricating oil passage 96 is formed in the end of the input shaft 3 of the continuously variable transmission 1 on the right side in the vehicle body. Engine oil is supplied to the lubricating oil passage 96 from an oil pump (not shown) and the lubricating oil passage 96 directs the engine oil to the one-way clutch 71. Every member in the transmission housing 6 is lubricated by the oil exclusive therefor supplied from the lubricating oil pump 77 exclusive for the transmission as shown in the first embodiment.

As shown in FIG. 11, the continuously variable transmission 1 is disposed at the rear end of the crankcase 82 and partially overlaps with the clutch 90 as viewed from a side. In FIG. 11, the component located at the lower rear end of the continuously variable transmission 1 and designated as 97 is a speed changing motor of the speed changing means 31. The speed changing motor 97 is mounted to the lower end of the transmission housing 6 on the rear side in the vehicle body with its axis inclined backward and upward.

The engine 81 for a motorcycle shown in this embodiment is different from a conventional engine in which an output shaft for driving the rear wheel is in meshing engagement with the clutch shaft via speed reduction gears only in the constitution of the output shaft. Thus, the engine 81 for a motorcycle according to this embodiment can be easily constructed by attaching the input shaft of the continuously variable transmission to a conventional engine instead of the output shaft.

### (Third Embodiment)

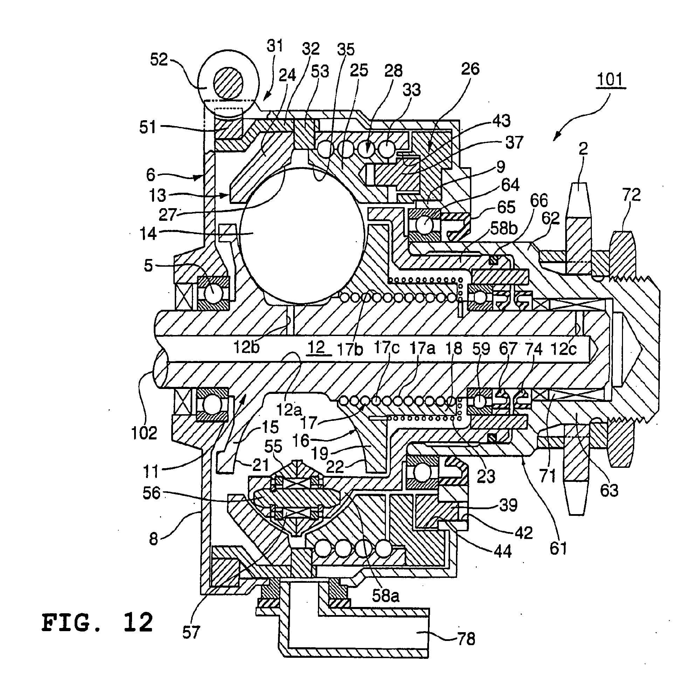

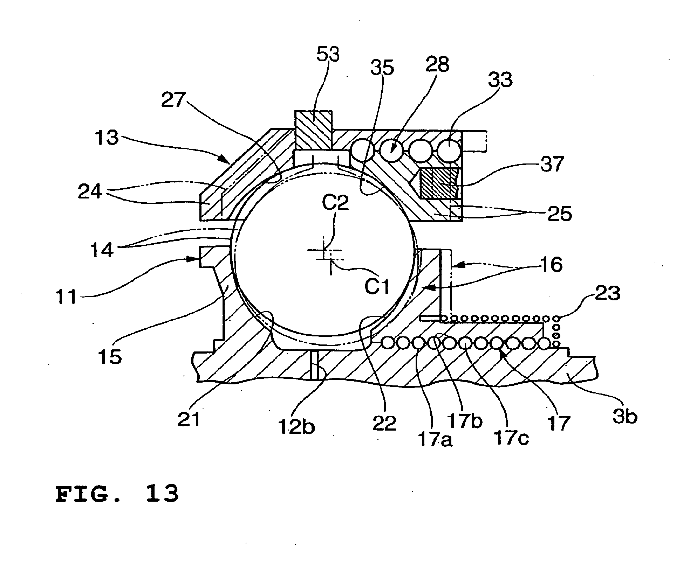

The continuously variable transmission 1 according to an embodiment may be constituted as shown in FIGs. 12 and 13. FIG. 12 is vertical cross-sectional view, illustrating another embodiment of the continuously variable transmission of an engine for a small vehicle, and FIG. 13 is an enlarged cross-sectional view, illustrating a ball at the time when the speed reduction ratio is minimum. Members identical with or equivalent to those described with reference to FIGs. 1 to 9 are denoted in the drawings by the same reference numerals and their detailed description is not repeated.

A continuously variable transmission 101 shown in FIGs. 12 and 13 is the same in constitution as the continuously variable transmission 1 described in the first embodiment except that the constitutions of the input shaft and the cylindrical output shaft are different. In this embodiment, an engine drive shaft (not shown) is connected to one end of an input shaft 102 of the continuously variable transmission 101 where the first inner half 15 is located, and the small-diameter portion 63 of the cylindrical output shaft 61 is connected to the other end of the input shaft 102 via the one-way clutch 71. The end of the cylindrical output shaft 61 opposite the balls 14 is closed and the cylindrical output shaft 61 has a bottomed cylindrical shape.

In this embodiment, the input shaft 3 has a lubricating oil passage 12 formed so as to supply lubricating oil to both the ball accommodating space and the one-way clutch accommodating space. The lubricating oil passage 12 has an axial extension 12a extending axially in the input shaft 3 from one end to the other, and radial extensions 12b and 12c extending radially from the parts of the axial extension 12 corresponding to the balls 14 and the one-way clutch 71, respectively. Lubricating oil (engine oil) is supplied to the lubricating oil passage 12 by an engine oil pump (not shown).

The continuously variable transmission 101 constituted as described above has the same effects as the continuously variable transmission of the first embodiment.

### (Fourth Embodiment)

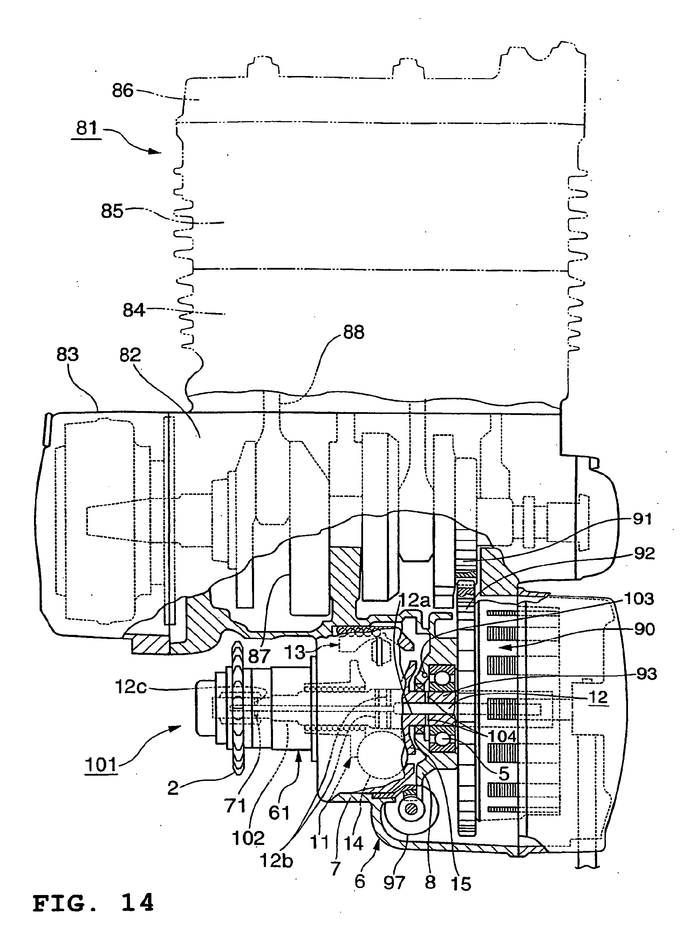

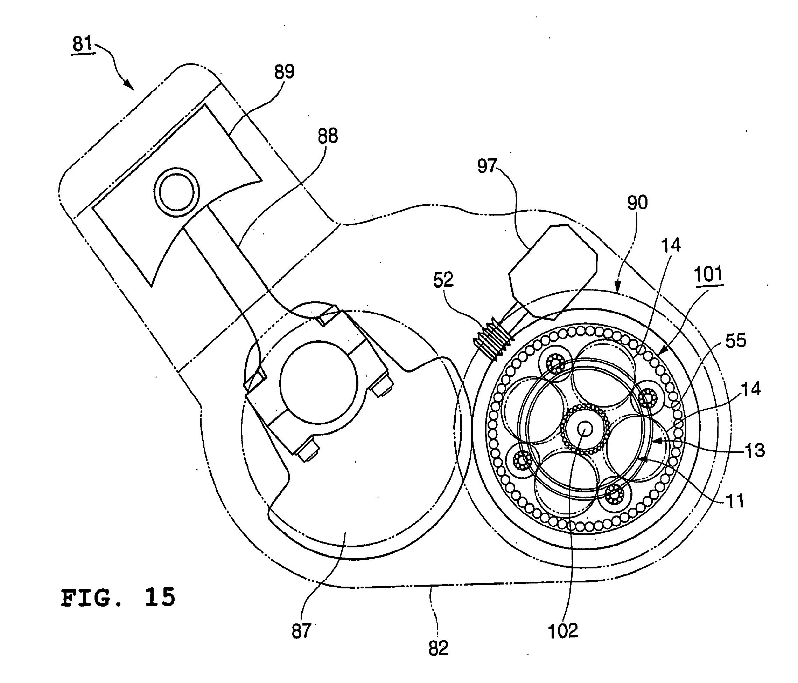

The continuously variable transmission 1 shown in the third embodiment can be incorporated in an engine as shown in FIGs. 14 and 15.

FIG. 14 is a view, illustrating another example of an engine for a motorcycle equipped with the continuously variable transmission, in which part of the crankcase is broken. FIG. 15 is a side view, illustrating the constitution of the engine shown in FIG. 14. Members identical with or equivalent to those described with reference to FIGs. 1 to 13 are denoted in the drawings by the same reference numerals and their detailed description is not repeated.

A continuously variable transmission 101 shown in FIGs. 14 and 15 is the same in constitution as the continuously variable transmission 101 described in the third embodiment (see FIGs. 12 and 13) and disposed coaxially with the clutch 90. The first inner ring half 15 side end of the input shaft 102 of the continuously variable transmission 101 is formed integrally with the clutch shaft 93 (engine drive shaft). The input shaft 102 extends in the vehicle width direction behind the crankshaft 87. The cylindrical output shaft 61, the one-way clutch 71 and the chain sprocket 2 are mounted on the end of the input shaft 102 on the left side in the vehicle body.

The lubricating oil passage 12 formed in the input shaft 102 of the continuously variable transmission 101 is connected to an engine oil supply passage 103 formed in the crankcase 82 via communication passages 104. Engine oil is supplied to the engine oil supply passage 103 from an oil pump (not shown). The axial extension 12a of the lubricating oil passage 12 extends in the transverse direction of the vehicle body in the input shaft 102 and closed at both ends of the input shaft 102. The radial extensions 12b of the lubricating oil passage 12 are formed in positions corresponding to the first and second inner ring halves 15 and 16, and the radial extensions 12c are formed in positions corresponding to the one-way clutch 71.

In this embodiment, the transmission housing 6 of the continuously variable transmission 101 is formed by the crankcase 82. That is, the housing body 7 of the transmission housing 6 is formed by shaping part of the crankcase 82 behind the crankshaft 87 into a cylindrical shape, and the lid 8 is formed by a vertical wall provided in the crankcase 82. The speed changing motor 97 of the continuously variable transmission 101 is housed in the transmission housing 6.

Since power can be directly transmitted from the clutch shaft 93 (engine drive shaft) to the input shaft 102 of the continuously variable transmission 101 in the engine 81 constituted as described above, the coupling structure for coupling the clutch shaft 93 to the continuously variable transmission 101 can be simple. Thus, it is possible to achieve a reduction in size and weight of the engine 81 and install the engine 81 with the ball type continuously variable transmission 101. As a result, it is possible to achieve a further reduction in weight of the body of a small vehicle provided with the engine 81 of this embodiment.

### (Fifth Embodiment)

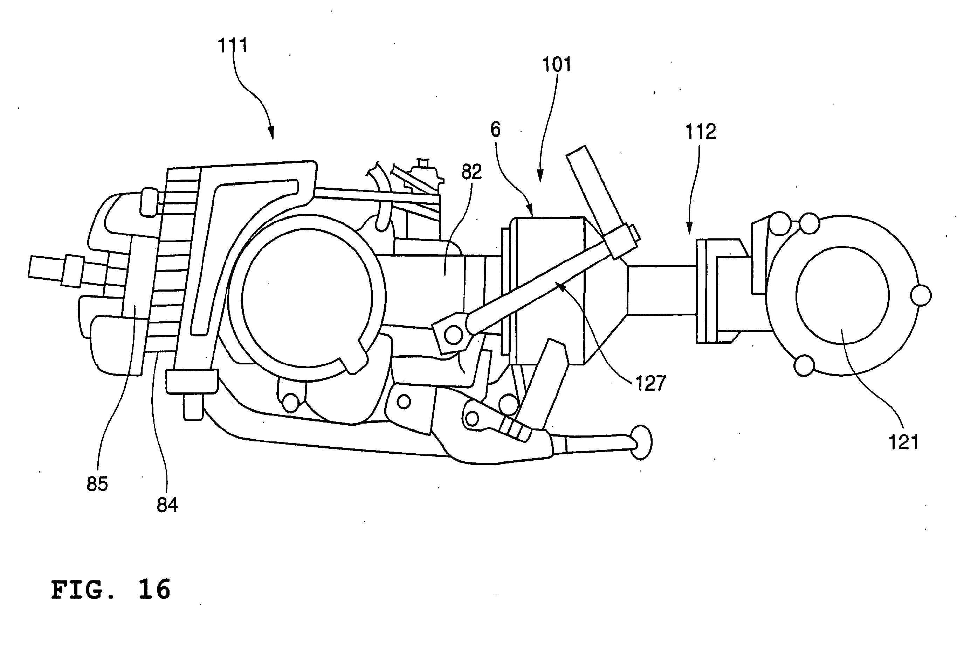

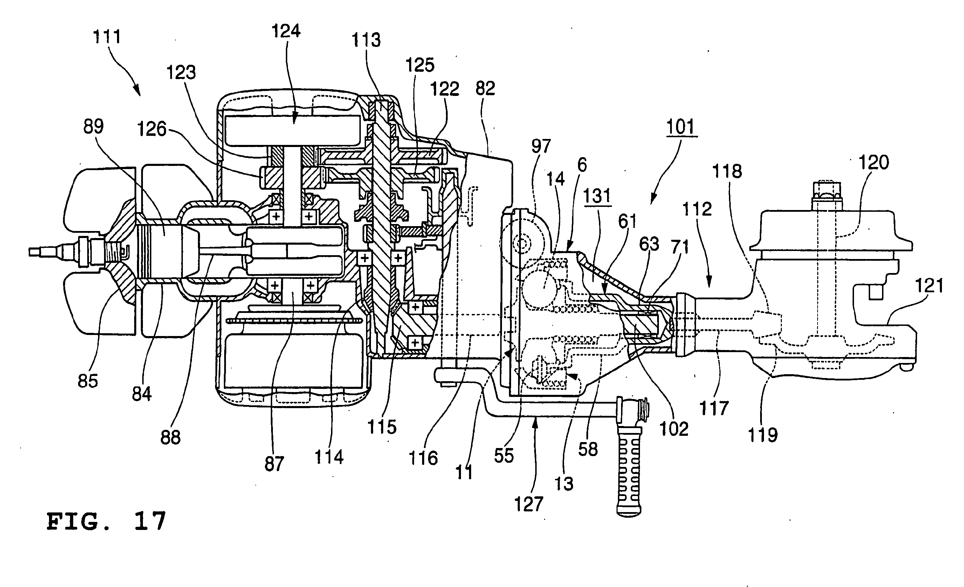

The engine for a small vehicle according to the present embodiment may be constituted as shown in FIGs. 16 and 17.

FIG. 16 is a side view, illustrating another embodiment of the engine for a small vehicle, and FIG. 17 is a transverse cross-sectional view, illustrating part of the engine and part of the continuously variable transmission. Members arts identical with or equivalent to those described with reference to FIGs 1 to 15 are denoted in the drawings by the same numerals and their detailed description is not repeated.

An engine 111 shown in FIGs. 16 and 17, which is an air-cooled, single-cylinder engine for a motorcycle, has a cylinder with an axis directed toward the front of the vehicle and a shaft drive transmission 112 for driving the rear wheel. In the engine 111, a continuously variable transmission 101 of this embodiment is incorporated in the part of the shaft drive transmission 112 extending in the longitudinal direction of the vehicle body. The continuously variable transmission 101 is generally the same in construction as the continuously variable transmission shown in FIGs. 12 to 15.

As shown in FIG. 17, the shaft drive transmission 112 has a front transmission shaft 116 in meshing engagement with an engine drive shaft 113 disposed behind the crankshaft 87 and extending parallel to the crankshaft 87 via bevel gears 114 and 115 and extending toward the rear of the vehicle body, the continuously variable transmission 101 connected to the rear end of the front transmission shaft 116, a rear transmission shaft 117 coupled to the cylindrical output shaft 61 of the continuously variable transmission 101, a rear wheel shaft 120 in meshing engagement with the rear transmission shaft 117 via bevel gears 118 and 119 and so on. The rear wheel shaft 120 is rotatably supported by a rear wheel side gear box 121, and the hub of the rear wheel is secured to the end of the rear wheel shaft 120 protruded to the right side of the vehicle body from the gear box 121.

The output side of a centrifugal clutch 124 is connected to the end of the engine drive shaft 113 on the right side in the vehicle body via speed reduction gears 122 and 123. The centrifugal clutch 124 is mounted on the end of the crankshaft 87 on the right side in the vehicle body, and, as is conventionally well known, transmits power to the output side when the rotational speed of the crankshaft 87 increases. Gears 125 and 126 provided adjacent to the speed reduction gears 122 and 123 are output gears of a kick starter 127.

In this embodiment, the continuously variable transmission 101 is incorporated in the shaft drive transmission 112 with its axial direction extending in the vehicle longitudinal direction, and the front transmission shaft 116 is disposed on the end of the input shaft 102 on the front side in the vehicle body. The bevel gears 114 and 115 interposed between the front transmission shaft 116 and the engine drive shaft 113 are configured to reduce the rotational speed of the engine drive shaft 113 and transmit the rotation of the engine drive shaft 113 to the front transmission shaft 116. That is, the input shaft 102 of the continuously variable transmission 1 is connected to the engine drive shaft 113 via speed reduction gears (114 and 115) as in the case with the continuously variable transmission 1 shown in the second embodiment (see FIG. 10).

The rear end of the cylindrical output shaft 61 of the continuously variable transmission 1 extends backward beyond the rear end of the input shaft 102, and the front end of the rear transmission shaft 117 is connected to the extended portion of the cylindrical output shaft 61. The transmission housing 6 of the continuously variable transmission 101 is supported by the rear end of the crankcase 82 and the rear wheel side gear box 121. The rear wheel side gear box 121 is rigidly secured to a body frame by a frame member (not shown).

The continuously variable transmission 101 according to this embodiment is lubricated by engine oil supplied to an oil chamber 131 formed in the transmission housing 6. The engine oil is supplied to the oil chamber 131 by an oil pump (not shown) and splashed by balls 14 and the driven rollers 55 rotating in the oil chamber 131 and adheres to the lubricated parts in the transmission housing 6. The one-way clutch 71 interposed between the input shaft 102 and the cylindrical output shaft 61 is lubricated by lubricating oil which flows into the cylindrical output shaft 61 from the side of the balls 14.

The engine 111 for a motorcycle according to this embodiment is different from an engine in which a shaft drive transmission for driving the rear wheel is connected to the engine drive shaft via speed reduction bevel gears and which is not equipped with a transmission only in the construction of the shaft drive transmission. Thus, a shaft drive engine equipped with a continuously variable transmission can be easily constructed by replacing the shaft drive device of an engine which is not equipped with a transmission with the continuously variable transmission 102 according to the present embodiment.

In the above embodiments, the one-way clutch 71 interposed between the second input shaft 3b or the input shaft 102 and the cylindrical output shaft 61 may be of any type, such as a claw clutch, roller clutch, or sprag clutch, as long as driving force in the opposite direction transmitted from the driving wheel to the engine of a small vehicle can be transmitted.

The description above discloses (amongst others) an embodiment of a continuously variable transmission of an engine for a small vehicle, which comprises: an input shaft to which the rotation of a crankshaft is transmitted; a rolling inner ring including of two halves aligned in the axial direction of the input shaft and rotatable together with the input shaft; a rolling outer ring including of two halves located radially outside the inner ring and aligned in the axial direction, and restrained from rotating around the axis of the input shaft; a plurality of transmitting balls rollably held between the inner ring and the outer ring; a plurality of driven rollers interposed between the transmitting balls and in contact with the transmitting balls; a roller supporting member for supporting the driven rollers for rotation around the axis of the input shaft; an output shaft to which the roller supporting member and a wheel driving transmission member are connected and which is provided for rotation around the axis of the input shaft; and speed changing means for varying the rotational speed of the transmitting balls around the inner ring by varying the distance between the halves of the inner and outer rings, wherein the output shaft has a cylindrical portion for receiving the input shaft, and a one-way clutch which can transmit power only from the output shaft to the input shaft is interposed in the cylindrical portion.

Accordingly, the driving force of the engine is transmitted to the driven rollers when the input shaft is rotated to rotate the balls around the axis of the input shaft, and then transmitted from the driven rollers to the driving wheel via the output shaft and the wheel driving transmission member. When engine braking is used or the engine is started by push-starting, the driving force in the opposite direction transmitted from the driving wheel to the output shaft is transmitted from the cylindrical portion of the output shaft to the input shaft via the one-way clutch. Thus, according to the present invention, all the driving force in the opposite direction can be transmitted from the output shaft to the engine. Therefore, there can be provided a continuously variable transmission of an engine for a small vehicle which allows engine braking and push starting of the engine.

According to a preferred embodiment of the continuously variable transmission of an engine for a small vehicle discussed above, the input shaft has a lubricating oil passage therein extending from an end of the input shaft to a position on the outer periphery thereof corresponding to the transmitting balls and connected to a lubricating oil supply device.

Accordingly, lubricating oil is constantly supplied from the lubricating oil supply device to the balls and the contact parts of the balls and the inner and outer rings are lubricated by the lubricating oil. Thus, in the continuously variable transmission according to this invention, temperature rise and wear of the contact parts of the balls and the inner and outer rings can be prevented. Also, the continuously variable transmission can be incorporated in a high-power engine.

According to a further preferred embodiment, there is disclosed an engine for a small vehicle equipped with the continuously variable transmission discussed above, wherein one end part of the input shaft of the continuously variable transmission is disposed parallel to an engine drive shaft and in meshing engagement with the engine drive shaft, a ball rolling part is disposed on the other end of the input shaft, the cylindrical portion of the output shaft; and the one-way clutch of the continuously variable transmission are disposed around an intermediate portion of the input shaft; and the wheel driving transmission member is disposed on the cylindrical portion.

Thus, the engine for a small vehicle according to the above embodiment can be constructed using a conventional continuously variable transmission engine in which a wheel driving transmission member is connected to an engine drive shaft via bevel gears. Thus, according to this embodiment, an engine for a small vehicle which is not equipped with a transmission can be converted to an engine equipped with a continuously variable transmission.

According to yet another embodiment discussed above, there is disclosed an engine for a small vehicle equipped with the continuously variable transmission discussed above, wherein one end of the input shaft of the continuously variable transmission is connected coaxially to an engine drive shaft; a ball rolling part is disposed on an intermediate portion of the input shaft; the cylindrical portion of the output shaft and the one-way clutch of the continuously variable transmission are located around the other end of the input shaft; and the wheel driving transmission member is disposed on the cylindrical portion.

Accordingly, the power of the engine can be directly transmitted from the engine drive shaft to the input shaft. Thus, the coupling structure for coupling the engine drive shaft to the continuously variable transmission can be simple. Therefore, it is possible to achieve a reduction in size and weight of the engine and equip the engine with the ball type continuously variable transmission. As a result, since the weight of a small vehicle equipped with the engine according to the present embodiment can be further reduced, high mileage and good running performance can be achieved. In addition, although the vehicle is so small that the space for components is limited, the degree of freedom in the position of an engine equipped with a continuously variable transmission is high.

The description above discloses, in order to provide a ball type continuously variable transmission which allows engine braking and push starting of the vehicle, an embodiment of the transmission comprising: an input shaft 3 to which the rotation of a crankshaft 87 is transmitted is provided. A rolling inner ring 11 rotatable together with the input shaft 3 is provided. A rolling outer ring 13 is located radially outside the inner ring 11 and restrained from rotating around the axis of a second input shaft 3b. A plurality of transmitting balls 14 are rollably held between the inner ring 11 and the outer ring 13. A plurality of driven rollers 55 are interposed between the transmitting balls 14 and in contact with the transmitting balls 14. A roller supporting member 58 is provided for supporting the driven rollers 55 for rotation around the axis of the second input shaft 3b. A cylindrical output shaft 61 to which the roller supporting member 58 and a wheel driving transmission member are connected and which is provided for rotation around the axis of the second input shaft 3b is provided. Speed changing means 31 is provided for varying the distance between the halves of the inner ring 11 and the distance between the halves of the outer rings 13. The cylindrical output shaft 61 has a small-diameter portion 63 for receiving the second input shaft 3b, and a one-way clutch 71 which can transmit power only from the cylindrical output shaft 61 to the second input shaft 3b is provided in the small-diameter portion 63.

## Claims

1. Continuously variable transmission comprising an inner ring (11) mounted on an input shaft (3;102), an outer ring (13) located radially outside the inner ring (11), a plurality of transmitting balls (14) being interposed between the inner and outer rings (11,13), a plurality of driven rollers (55) interposed between the transmitting balls (14), a roller supporting member (58) rotatably supporting the driven rollers (55), an output shaft (61) being connected to the roller supporting member (58), and a transmission housing (6) accommodating the inner ring (11), the outer ring (13), the transmitting balls (14), and the driven rollers (55), **characterised in that** a one-way clutch (71) is disposed outside of the transmission housing (6) and is interposed between the input and output shafts (3;102;61), which can transmit power only from the output shaft (61) to the input shaft (3;102).

2. Continuously variable transmission according to claim 1, **characterised in that** a rotation of a crankshaft (87) is transmitted to the input shaft (3; 102).

3. Continuously variable transmission according to claim 1 or 2, **characterised in that** the rolling inner ring (11) includes two halves (15,16) aligned in an axial direction of the input shaft (3; 1 02) and rotatable together with the input shaft (3;102), and wherein the rolling outer ring (13) includes two halves (24,25) located radially outside the inner ring (11) and aligned in the axial direction, and restrained from rotating around the axis of the input shaft (3;102).

4. Continuously variable transmission according to one of the claims 1 to 3, **characterised in that** the transmitting balls (14) are rollably held between the inner ring (11) and the outer ring (13) and the driven rollers (55) interposed between the transmitting balls (14) are in contact with the transmitting balls (14).

5. Continuously variable transmission according to one of the claims 1 to 4, **characterised in that** the roller supporting member (58) supports the driven rollers (55) for rotation around the axis of the input shaft (3;102).

6. Continuously variable transmission according to one of the claims 1 to 5, **characterised in that** the roller supporting member (58) and a wheel driving transmission member (2) are connected to the output shaft (61), said output shaft (61) being provided for rotation around the axis of the input shaft (3; 1 02).

7. Continuously variable transmission according to one of the claims 1 to 6, **characterised by** a speed changing means (31) for varying the rotational speed of the transmitting balls (14) around the inner ring (11) by varying the distance between the halves of the inner and outer rings (11,13).

8. Continuously variable transmission according to one of the claims 1 to 7, **characterised in that** the output shaft (61) has a cylindrical portion (63) for receiving the input shaft (3;102), and wherein the one-way clutch (71), which can transmit power only from the output shaft (61) to the input shaft (3;102), is interposed in the cylindrical portion (63).

9. Continuously variable transmission according to one of the claims 1 to 8, **characterised in that** the input shaft (3; 102) has a lubricating oil passage (12) therein extending from an end of the input shaft (3;102) to a position on the outer periphery thereof corresponding to the transmitting balls (14) and connected to a lubricating oil supply device (77).

10. Continuously variable transmission according to one of the claims 1 to 9, **characterised in that** one end part of the input shaft (3; 1 02) of the continuously variable transmission (1;101) is disposed parallel to an engine drive shaft and in meshing engagement with the engine drive shaft, and wherein a transmission ball rolling part is disposed on the other end of the input shaft (3;102).

11. Continuously variable transmission according to claim 10, **characterised in that** the cylindrical portion (63) of the output shaft (61) and the one-way clutch (71) of the continuously variable transmission (1:101) are disposed around an intermediate portion of the input shaft (3; 102), and wherein the wheel driving transmission member (2) is disposed on the cylindrical portion (63).

12. Continuously variable transmission according to one of the claims 1 to 9, **characterised in that** one end of the input shaft (3;102) of the continuously variable transmission (1:101) is connected coaxially to an engine drive shaft, and wherein a transmission ball rolling part is disposed on an intermediate portion of the input shaft (3; 102).

13. Continuously variable transmission according to claim 12, **characterised in that** the cylindrical portion (63) of the output shaft (61) and the one-way clutch (71) of the continuously variable transmission (1:101) are located around the other end of the input shaft (3; 102), and wherein the wheel driving transmission member (2) is disposed on the cylindrical portion (63).

## Patentansprüche

1. Stufenlos veränderbares Getriebe, aufweisend einen Innenring (11), montiert auf einer Eingangswelle (3; 102), einen Außenring (13), radial außerhalb des Innenrings (11) angeordnet, eine Mehrzahl von Übertragungskugeln (14), die zwischen dem Innen- und Außenring (11, 13) eingesetzt sind, eine Mehrzahl von angetriebenen Rollen (55), eingesetzt zwischen den Übertragungskugeln (14), ein Rollenlagerteil (58), das drehbar die angetriebenen Rollen (55) lagert, eine Ausgangswelle (61), die mit dem Rollenlagerteil (58) verbunden ist und ein Getriebegehäuse (6), das den Innenring (11), den Außenring (13), die Übertragungskugeln (14) und die angetriebenen Rollen (55) aufnimmt, **dadurch gekennzeichnet, dass** eine Freilaufkupplung (71) außerhalb des Getriebegehäuses (6) angeordnet ist und zwischen die Eingangs- und die Ausgangswelle (3; 102; 61) eingesetzt ist, die nur Leistung von der Ausgangswelle (61) zu der Eingangswelle (3; 102) übertragen kann.

2. Stufenlos veränderbares Getriebe nach Anspruch 1, **dadurch gekennzeichnet, dass** eine Drehung einer Kurbelwelle (87) auf die Eingangswelle (3; 102) übertragen wird.

3. Stufenlos veränderbares Getriebe nach Anspruch 1 oder 2, **dadurch gekennzeichnet, dass** der Rolleninnenring (11) zwei Hälften (15, 16), ausgerichtet in einer axialen Richtung der Eingangswelle (3; 102), und mit der Eingangswelle (3; 102) gemeinsam drehbar, enthält und wobei der Rollenaußenring (13) zwei Hälften (24, 25), angeordnet radial außerhalb des Innenrings (111) und in der axialen Richtung ausgerichtet, enthält und am Drehen um die Achse der Eingangswelle (3; 102) gehindert wird.

4. Stufenlos veränderbares Getriebe nach einem der Ansprüche 1 bis 3, **dadurch gekennzeichnet, dass** die Übertragungskugeln (14) zwischen dem Innenring (11) und dem Außenring (13) drehbar gehalten werden und die angetriebenen Rollen (55), eingesetzt zwischen die Übertragungskugeln (14), mit den Übertragungskugeln (14) in Kontakt sind.

5. Stufenlos veränderbares Getriebe nach einem der Ansprüche 1 bis 4, **dadurch gekennzeichnet, dass** das Rollenlagerteil (58) die angetriebenen Rollen (55) zur Drehung um die Achse der Eingangswelle (3; 102) lagert.

6. Stufenlos veränderbares Getriebe nach einem der Ansprüche 1 bis 5, **dadurch gekennzeichnet, dass** das Rollenlagerteil (58) und ein Radantriebs- Übertragungsteil (2) mit der Ausgangswelle (61) verbunden sind, wobei die Ausgangswelle (61) zur Drehung um die Achse der Eingangswelle (3; 102) vorgesehen ist.

7. Stufenlos veränderbares Getriebe nach einem der Ansprüche 1 bis 6, **gekennzeichnet durch** eine Drehzahlveränderungseinrichtung (31) zum Verändern der Drehzahl der Übertragungskugeln (14) rund um den Innenring (11) **durch** Verändern des Abstandes zwischen den Hälften des Innen- und des Außenrings (11, 13).

8. Stufenlos veränderbares Getriebe nach einem der Ansprüche 1 bis 7, **dadurch gekennzeichnet, dass** die Ausgangswelle (61) einen zylindrischen Abschnitt (63) zum Aufnehmen der Eingangswelle (3; 102) hat und wobei die Freilaufkupplung (71), die Leistung nur von der Ausgangswelle (61) auf die Eingangswelle (3; 102) übertragen kann, in den zylindrischen Abschnitt (63) eingesetzt ist.

9. Stufenlos veränderbares Getriebe nach einem der Ansprüche 1 bis 8, **dadurch gekennzeichnet, dass** die Eingangswelle (3; 102) einen Schmierölkanal (12) hat, der sich darin von einem Ende der Eingangswelle (3; 102) zu einer Position auf dem Außenumfangs desselben, entsprechend der Übertragungskugeln (14), erstreckt und der mit einer Schmierölzuführungsvorrichtung (77) verbunden ist.

10. Stufenlos veränderbares Getriebe nach einem der Ansprüche 1 bis 9, **dadurch gekennzeichnet, dass** ein Endteil der Eingangswelle (3; 102) des stufenlos veränderbaren Getriebes (1; 101) parallel zu einer Motorantriebswelle angeordnet und in Kämmeingriff mit der Motorantriebswelle ist und wobei ein Übertragungskugel- Rollteil an dem anderen Ende der Eingangswelle (3; 102) angeordnet ist.

11. Stufenlos veränderbares Getriebe nach Anspruch 10, **dadurch gekennzeichnet, dass** der zylindrische Abschnitt (63) der Ausgangswelle (61) und die Freilaufkupplung (71) des stufenlos veränderbaren Getriebes (1; 101) um einen Zwischenabschnitt der Eingangswelle (3; 102) angeordnet sind und wobei das Radantriebs- Übertragungsteil (2) an dem zylindrischen Abschnitt (63) angeordnet ist.

12. Stufenlos veränderbares Getriebe nach einem der Ansprüche 1 bis 9, **dadurch gekennzeichnet, dass** ein Ende der Eingangswelle (3; 102) des stufenlos veränderbaren Getriebes (1; 101) koaxial mit einer Motorantriebswelle verbunden ist und wobei ein Übertragungskugel- Rollteil an einem Zwischenabschnitt der Eingangswelle (3; 102) angeordnet ist.

13. Stufenlos veränderbares Getriebe nach Anspruch 12, **dadurch gekennzeichnet, dass** der zylindrische Abschnitt (63) der Ausgangswelle (61) und die Freilaufkupplung (71) des stufenlos veränderbaren Getriebes (1; 101) um das andere Ende der Eingangswelle (3; 102) herum angeordnet sind und wobei das Radantriebs- Übertragungsteil (2) an dem zylindrischen Abschnitt (63) angeordnet ist.

## Revendications

1. Transmission à variation continue comprenant une bague interne (11) montée sur un arbre d'entrée (3 ; 102), une bague externe (13) positionnée radialement à l'extérieur de la bague interne (11), une pluralité de billes de transmission (14) qui sont intercalées entre les bagues interne et externe (11, 13), une pluralité de rouleaux entraînés (55) intercalés entre les billes de transmission (14), un élément de support de rouleau (58) supportant de manière rotative les rouleaux entraînés (55), un arbre de sortie (61) qui est raccordé à l'élément de support de rouleau (58) et un boîtier de transmission (6) logeant la bague interne (11), la bague externe (13), les billes de transmission (14) et les rouleaux entraînés (55), **caractérisée en ce qu'**un embrayage unidirectionnel (71) est disposé à l'extérieur du boîtier de transmission (6) et est intercalé entre les arbres d'entrée et de sortie (3 ; 102 ; 61), qui ne peut transmettre la puissance que de l'arbre de sortie (61) à l'arbre d'entrée (3 ; 102).

2. Transmission à variation continue selon la revendication 1, **caractérisée en ce qu'**une rotation d'un vilebrequin (87) est transmise à l'arbre d'entrée (3 ; 102).

3. Transmission à variation continue selon la revendication 1 ou 2, **caractérisée en ce que** la bague interne roulante (11) comprend deux moitiés (15, 16) alignées dans une direction axiale de l'arbre d'entrée (3 ; 102) et pouvant tourner conjointement à l'arbre d'entrée (3 ; 102) et dans laquelle la bague externe roulante (13) comprend deux moitiés (24, 25) situées radialement à l'extérieur de la bague interne (11) et alignées dans la direction axiale, et empêchées de tourner autour de l'axe de l'arbre d'entrée (3, 102).

4. Transmission à variation continue selon l'une quelconque des revendications 1 à 3, **caractérisée en ce que** les billes de transmission (14) sont maintenues de manière roulante entre la bague interne (11) et la bague externe (13) et les rouleaux entraînés (55) interposés entre les billes de transmission (14) sont en contact avec les billes de transmission (14).

5. Transmission à variation continue selon l'une quelconque des revendications 1 à 4, **caractérisée en ce que** l'élément de support de rouleau (58) supporte les rouleaux entraînés (55) pour la rotation autour de l'axe de l'arbre d'entrée (3 ; 102).

6. Transmission à variation continue selon l'une quelconque des revendications 1 à 5, **caractérisée en ce que** l'élément de support de rouleau (58) et un élément de transmission d'entraînement de roue (2) sont raccordés à l'arbre de sortie (61), ledit arbre de sortie (61) étant prévu pour la rotation autour de l'axe de l'arbre d'entrée (3 ; 102).

7. Transmission à variation continue selon l'une quelconque des revendications 1 à 6, **caractérisée par** des moyens de changement de vitesse (31) pour modifier la vitesse de rotation des billes de transmission (14) autour de la bague interne (11) en modifiant la distance entre les moitiés des bagues interne et externe (11, 13).

8. Transmission à variation continue selon l'une quelconque des revendications 1 à 7, **caractérisée en ce que** l'arbre de sortie (61) a une partie cylindrique (63) pour recevoir l'arbre d'entrée (3 ; 102) et dans laquelle l'embrayage unidirectionnel (71) qui ne peut transmettre de la puissance que de l'arbre de sortie (61) à l'arbre d'entrée (3 ; 102), est intercalé dans la partie cylindrique (63).

9. Transmission à variation continue selon l'une quelconque des revendications 1 à 8, **caractérisée en ce que** l'arbre d'entrée (3 ; 102) a un passage d'huile de lubrification (12) à l'intérieur de celui-ci s'étendant à partir d'une extrémité de l'arbre d'entrée (3 ; 102) jusqu'à une position sur sa périphérie externe correspondant aux billes de transmission (14) et raccordé à un dispositif d'alimentation d'huile de lubrification (77).

10. Transmission à variation continue selon l'une quelconque des revendications 1 à 9, **caractérisée en ce qu'**une partie d'extrémité de l'arbre d'entrée (3 ; 102) de la transmission à variation continue (1 ; 101) est disposée parallèlement à un arbre d'entraînement de moteur et est mise en prise par engrènement avec l'arbre d'entraînement de moteur, et dans laquelle une partie roulante de billes de transmission est disposée sur l'autre extrémité de l'arbre d'entrée (3 ; 102).

11. Transmission à variation continue selon la revendication 10, **caractérisée en ce que** la partie cylindrique (63) de l'arbre de sortie (61) et l'embrayage unidirectionnel (71) de la transmission à variation continue (1 ; 101) sont disposés autour d'une partie intermédiaire de l'arbre d'entrée (3 ; 102) et dans laquelle l'élément de transmission d'entraînement de roue (2) est disposé sur la partie cylindrique (63).

12. Transmission à variation continue selon l'une quelconque des revendications 1 à 9, **caractérisée en ce qu'**une extrémité de l'arbre d'entrée (3 ; 102) de la transmission à variation continue (1 ; 101) est raccordée de manière coaxiale à un arbre d'entraînement de moteur, et dans laquelle une partie roulante de billes de transmission est disposée sur une partie intermédiaire de l'arbre d'entrée (3 ; 102).

13. Transmission à variation continue selon la revendication 12, **caractérisée en ce que** la partie cylindrique (63) de l'arbre de sortie (61) et l'embrayage unidirectionnel (71) de la transmission à variation continue (1 ; 101) sont positionnés autour de l'autre extrémité de l'arbre d'entrée (3 ; 102) et dans laquelle l'élément de transmission d'entraînement de roue (2) est disposé sur la partie cylindrique (63).
